(19) Europäisches Patentamt / European Patent Office / Office européen des brevets

(11) **EP 3 288 380 B1**

(12) **EUROPEAN PATENT SPECIFICATION**

(45) Date of publication and mention
of the grant of the patent:
**24.11.2021 Bulletin 2021/47**

(21) Application number: **16777261.5**

(22) Date of filing: **07.04.2016**

(51) Int Cl.:
*A01N 43/28* (2006.01)       *A01N 31/02* (2006.01)
*C11D 3/48* (2006.01)        *D21H 21/36* (2006.01)
*A01N 31/04* (2006.01)       *A01N 31/06* (2006.01)
*A01N 31/08* (2006.01)       *A01N 35/02* (2006.01)
*A01N 35/04* (2006.01)       *A01N 37/02* (2006.01)
*A01N 37/10* (2006.01)       *A01N 37/28* (2006.01)
*A01N 37/40* (2006.01)       *C02F 1/50* (2006.01)
*A01N 37/52* (2006.01)       *A01N 41/00* (2006.01)
*A01N 47/06* (2006.01)       *A01P 1/00* (2006.01)

(86) International application number:
**PCT/US2016/026400**

(87) International publication number:
**WO 2016/164555 (13.10.2016 Gazette 2016/41)**

(54) **SYNERGISTIC PRESERVATIVE COMPOSITIONS**

SYNERGISTISCHE KONSERVIERUNGSZUSAMMENSETZUNGEN

COMPOSITIONS DE CONSERVATEURS SYNERGIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.04.2015 US 201562145310 P**

(43) Date of publication of application:
**07.03.2018 Bulletin 2018/10**

(73) Proprietor: **ISP Investments LLC
Wilmington, Delaware 19805 (US)**

(72) Inventors:
• PREMACHANDRAN, Raman
**White Plains, NY 10605 (US)**
• HAKIMI, Najeeb H.
**Edison, NJ 08817 (US)**
• MEHTA, Kalpa
**Austin, TX 78717 (US)**

• **WINKOWSKI, Karen
Springfield, NJ 07081 (US)**
• **MUSYOKI, Jennifer
Prospect Park, NJ 07508 (US)**
• **GUPTA, Jyoti
Basking Ridge, NJ 07920 (US)**

(74) Representative: **Kutzenberger Wolff & Partner
Waidmarkt 11
50676 Köln (DE)**

(56) References cited:
**EP-A1- 0 338 440          EP-B1- 1 450 823
WO-A1-01/82694          WO-A1-99/39581
WO-A1-2009/158617      WO-A1-2010/005776
WO-A1-2010/006235      WO-A1-2010/014715
WO-A1-2015/181840      WO-A1-2016/154511
US-A- 4 259 202          US-A1- 2007 265 352
US-B2- 6 709 647**

**Description**

**FIELD OF THE INVENTION**

The present disclosure relates to synergistic preservative compositions, and more particularly, to synergistic preservative compositions that are capable of providing broad spectrum antimicrobial activity comprising propylene carbonate, one or more organic compounds, and/or one or more preservative compounds, and wherein said propylene carbonate do not possess any antimicrobial activity.

**BACKGROUND OF THE INVENTION**

The preservatives or preservative systems are employed in various non-limiting industrial applications including personal care, household, coatings, metalworking fluids, paper, wood, plastics, disinfection, cosmetics, toiletry, pharmaceuticals, food, beverages, oral care, paints, or water treatment to overcome the problems of mildew, mold, fungi, bacterial based microbial contamination. In this context, reference can be made to WO 2016/154511 A1 (prior art according to Article 54(3) EPC), WO 01/82694 A1, WO 2009/158617 A1, WO 2010/005776 A1, WO 2010/006235 A1, WO 2010/014715 A1, EP 0 338 440 A1, WO 99/39581 A1 and WO 2015/181840 A1 (prior art according to Article 54(3) EPC).

Particularly, the personal care, pharmaceuticals, food, beverages, nutrition care products fragrance products, cosmeceuticals, nutraceuticals, cosmetics, treatment, skin care and anti-aging products usually incorporate ingredients that support microbial growth and proliferation, and therefore, these products engage significant amounts of preservatives as they directly affect the consumers. Additionally, regardless of their use, these products in general include aqueous medium as one important component. This aqueous phase facilitates a medium in which microorganisms can survive and/or proliferate. Thus, these products by their very nature create an environment and viable medium for the proliferation of microbial organisms. Without the addition of some preservative agent, these types of products are susceptible to microbial contamination and proliferation.

Accordingly, a preservative can be added to such products at the time of manufacturing in order to protect the product against microbial contamination in the long term. The particular choice of type and level of the preservative is typically made by the formulator based upon a number of factors including, for example, the microbiological requirements of the product, cost, the pH of the product, compatibility with the other formulation ingredients and regulatory restrictions. A guide to the factors used in preservative selection and testing can be found in "Cosmetic and Drug Preservation, Vol. I, Principles and Practice", published by Marcel Dekker Inc.

In the recent past, the demand for natural consumer products is of great importance across the globe. Such products tend to comprise preservatives that are natural, green, organic, sustainable, bio-degradable, nature identical, eco-friendly, environmentally safe, preservative free, paraben free, alcohol free, capryl glycol free, phenoxyethanol free and non-toxic in nature. Such natural sector(s) has become one of the fastest growing in the North American personal care and cosmetics based industrial segments.

Further, according to current regulatory guidelines, the permitted use levels of conventional, traditional and progressive preservatives are not capable of preserving end-user products. However, such preservatives are capable of preserving the end-user products by inhibiting or killing the microbial strains at higher concentrations levels than recommended limits. Therefore, there is an absolute need to find a solution to make or empower such pre-existing conventional, traditional and progressive preservatives that can kill or inhibit microbial strains within permitted use levels.

Although some of these progressive preservatives are green but have inherent properties of not partitioning into the water phase to enhance preservative activity. Instead they connect or mix with the oil phase of the end-user products to modify their rheological properties in a negative way.

Accordingly, it is a primary objective of the present application is to find a solution to increase efficacy of conventional and progressive preservatives and thereby reduced or lower concentrations of such preservatives that can kill or inhibit the microbial strains. Accordingly, the lower concentrations of preservatives lead to reduced cost and minimized toxicity.

Another objective or the present application is to provide an efficacious preservative or preservative system that is compatible with end-user products and does not affect its physical and rheological properties during if integrated with them.

Yet another objective of the present application is provide an efficacious preservative or preservative system that can offer broad spectrum efficacy against gram (+), gram (-) bacteria, mold and yeast.

One other objective of the present application is to provide a solution to enhance the partitioning of poorly water soluble green progressive preservatives into the water phase when added to end-user products which comprise mixtures of oil and water based ingredients.

Still another objective of the present application is to provide an effective preservative or preservative system which is free from phenoxyethanol, capryl glycol, and/or alcohol.

US5026723A assigned to Katayama Chemical Works Co discloses a microbicidal/microbistatic composition for industrial use comprising (I) a nitrobromopropane derivative selected from the group consisting of: (a) 2-bromo-2-nitro-1,3-diacetyloxypropane, and (b) 2-bromo-2-nitro-1,3-diformyloxypropane; and (II) 4,5-dichloro-1,2-dithiol-3-one wherein (I) and (II) are present in a synergistic ratio of from 100:1 to 1:5 by weight, wherein, the hydrophilic organic solvent is selected from the group consisting of dimethylformamide, methyl acetate, ethyl acetate, propyl acetate, 3-methoxybutyl acetate, 2-ethoxymethyl acetate, 2-ethoxyethyl acetate and propylene carbonate.

WO1999006506A1 assigned to PAINTEX INT CORP discloses a non-toxic, nonirritating, non-flammable composition for cleaning surfaces, absent chlorinated solvents and having a low VOC comprising in combination: a synergistic combination of an anionic and / or nonionic poly alkoxylated surfactant and a lower poly alkylene glycol alkyl ether having a repeating unit containing 2-9 carbon atoms, wherein the aprotic solvent is selected from the group consisting of ethylene carbonate, propylene carbonate, dimethyl sulfoxide, N-methyl-2-pyrolidinone and butyrolactone.

US5122301A assigned to Great Lakes Chemical Corp. discloses an antimicrobial composition comprising an antimicrobial selected from the group consisting of bromonitrostyrene and bromonitroethenylfuran; and a carrier solvent selected from the group consisting of propylene carbonate, ethylene carbonate and mixtures thereof.

## SUMMARY OF THE INVENTION

The primary objective of the present application is to provide aqueous and non-aqueous based end-user compositions which

> (i) are selected from the group consisting of cosmetic products, toiletry products, personal care products, oral care products, skin care products, hair care products, household & cleaning products, soap and bath products, industrial and institutional cleaning products, disinfecting products, wound care, sanitary products, agricultural compositions, textile industries, coating industries and laundry products; and

> (ii) contain, in the range of from 0.01 *wt.* % to 5.0 *wt.* % of the total composition,

> - a synergistic preservative composition

>> (a) being capable of providing broad spectrum antimicrobial activity and of inhibiting or killing *Staphylococcus aureus, Escherichia coli, Pseudomonas aeruginosa, Aspergillus brasiliensis, Candida albicans* and/or *Burkhodelia cepacia,* and

>> (b) comprising 0.1 *wt.* % to 99.9 *wt.* % of propylene carbonate and 0.1 *wt.* % to 99.9 *wt.* % of one or more organic compounds selected from the group consisting of hexanediol, octanediol and hexylglycerin,

wherein the ratio of propylene carbonate to organic compounds is in the range of from 1:10 to 10:1.

Another important aspect of the present application provides a process for preparing the above-described synergistic preservative, wherein said process comprises mixing (i) 0.1 *wt.* % to 99.9 *wt.* % of propylene carbonate; and (ii) 0.1 *wt.* % to 99.9 *wt.* % of one or more organic compounds selected from the group consisting of hexanediol, octanediol and hexylglycerin.

According to yet another aspect of the present application, a method is provided of killing bacteria, fungi, molds, yeasts and viruses or inhibiting their growth in a cosmetic, personal care, house hold, cleaning, and/or Industrial & Institutional products those are susceptible to growth of microorganisms comprising incorporating into such product 0.01 *wt.* % to 5.0 *wt.* % of said synergistic preservative composition.

## DETAILED DESCRIPTION OF THE INVENTION

While this specification concludes with claims particularly pointing out and distinctly claiming that which is regarded as the invention, it is anticipated that the invention can be more readily understood through reading the following detailed description of the invention and study of the included examples.

By the term "comprising" herein is meant that various optional, compatible components can be used in the compositions herein, provided that the important ingredients are present in the suitable form and concentrations. The term "comprising" thus encompasses and includes the more restrictive terms "consisting of" and "consisting essentially of" which can be used to characterize the essential ingredients such as propylene carbonates, aromatic compounds, solvents and/or conventional preservatives if any of the synergistic preservative composition.

All percentages, parts, proportions and ratios as used herein, are by weight of the total composition, unless otherwise specified. All such weights as they pertain to listed ingredients are based on the active level and, therefore; do not include solvents or byproducts that may be included in commercially available materials, unless otherwise specified.

All references to singular characteristics or limitations of the present invention shall include the corresponding plural characteristic or limitation, and vice-versa, unless otherwise specified or clearly implied to the contrary by the context in which the reference is made.

Numerical ranges as used herein are intended to include every number and subset of numbers contained within that range, whether specifically disclosed or not. Further, these numerical ranges should be construed as providing support for a claim directed to any number or subset of numbers in that range.

As used herein, the words "preferred," "preferably" and variants refer to embodiments of the invention that afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

References herein to "one embodiment," "one aspect" or "one version" or "one objective" of the invention include one or more such embodiment, aspect, version or objective, unless the context clearly dictates otherwise.

The term "preservative" or "antimicrobial" as used herein is to be understood to refer to agents such as bactericides, fungicides, algicides, aquaticides, herbicide, insecticide, pesticide, plant growth regulators and the like, which are used for their ability to inhibit growth of and/or kill biological and/or microbiological species such as bacteria, fungi, algae, caterpillar, insects, larvae, mildew, rodents, spider, worm and the like.

The term 'Preservation" refers to prevent or retard the any consumer products deterioration due to microbial attack. A preservative is an active ingredient that hinders or kills the growth of bacterial and fungal strains that can be present in any consumer products, and chiefly water based consumer products. Therefore, the preservative action of any consumer products is performed by employing a single preservative or mixture of preservatives to have broad spectrum antimicrobial activity.

The term "Broad Spectrum" as described herein means that the preservative compositions of the present application have ability to inhibit or kill wide range of microbial organisms which are responsible to decay or spoil any consumer products that are prone to microbial attack.

The term "additive effect" or "additive synergism" refers to the combined effect produced by the action of two or more compounds or two or more organic compounds having less preservative ability being equal to the sum of their separate effects of organic compounds or preservative compounds. The term "cumulative effect" or "cumulative synergism" refers to serial addition of said organic or preservative compounds results a synergistic effect which is several times greater than sum of their individual effects or additive effects.

As used, herein, "stable" and "stability" mean a composition which is significantly unaffected in chemical nature, physical homogeneity and/or color upon exposure to conditions reasonably expected to be incurred in transport, storage and their use in end-user applications. Stability may be determined either by empirical observation or by suitable methods of chemical and/or physical examination that would be known to one skilled in the art.

What is described herein is a synergistic preservative composition the Synergy Index (SI) value of which is about 0.05 to 0.1, about 0.1 to about 0.2, about 0.2 to 0.3, about 0.3 to 0.4, about 0.4 to 0.5, about 0.5 to 0.6, about 0.6 to 0.7, about 0.7 to 0.8, about 0.8 to 0.9, and about 0.9 to 0.95.

According to one important aspect of the present application, the synergistic preservative composition can be totally free from phenoxyethanol, alcohol and/or capryl glycol. According to additional aspect of the present application, the synergistic preservative composition includes phenoxyethanol, alcohol and/or capryl glycol. Further, the present composition can be an alternative preservative or preservative system to replace the phenoxyethanol, alcohol and/or capryl glycol.

According to another aspect of the present application, the synergistic composition of the present application is capable of providing cumulative synergistic effect than additive synergistic effect, wherein said cumulative synergy increases the efficacy of the total composition and reduces the required approved antimicrobial use levels of (i) one or more organic compounds.

The inclusion of propylene carbonate to (i) one or more organic compound/s provides an effective composition capable of demonstrating cumulative synergism. The use of propylene carbonate increases the efficacy of the cumulative synergistic composition and thereby further reduces the use levels of required organic compounds or preservative compounds. The reduction in use or required level of organic compounds/preservative compounds is extremely significant in nature.

The amount of propylene carbonate employed in the present application includes but is not limited to 0.1 *wt.* % to about 10 *wt.* %, about 11 *wt.* % to about 20 *wt.* %, about 21 *wt.* % to about 30 *wt.* %, about 31 *wt.* % to about 40 *wt.* %, about 41 *wt.* % to about 50 *wt.* %, about 51 *wt.* % to about 60 *wt.* %, about 61 *wt.* % to about 70 *wt.* %, about 71 *wt.* % to about 80 *wt.* %, about 81 *wt.* % to about 90 *wt.* %, about 91 *wt.* % to 99.9 *wt.* %.

According to one important embodiment of the present application, the presence propylene carbonate capable of reducing yellowing effect of preservative compound or organic compounds that are susceptible for yellowing either alone or when added to end-user products.

The ratio of organic compounds to propylene carbonate is optimized to provide antimicrobial action which is synergistically intensified. The ratio of propylene carbonate to organic compounds is in the range of from 1:10 to 10:1.

The synergistic composition of propylene carbonate with organic compounds or preservative compounds is capable of providing broad spectrum antimicrobial properties. Propylene carbonate has no significant antimicrobial and antifungal characteristics (MIC). However, the propylene carbonate boosts significantly both the antimicrobial and antifungal characteristics of known preservatives or boosters. The presence of propylene carbonate in the composition has the ability to maximize the partitioning of the mixture of organic/preservative compounds into the water phase when added to an end-user composition comprising a mixture of oil and a water phase. Further, the propylene carbonate based compositions or blends acts as delivery agent for other preservative/organic actives that have low polarity with high dielectric constant making it a suitable blend to dissolve hydrophobic non polar actives, the high dielectric constant of the composition enable them to partition the active towards the oil/water interface which is critical for maximum efficacy and reduced use levels of preservatives or boosters.

The amount of organic compounds employed in the present application includes, but is not limited to, 0.1 *wt. %* to about 10 *wt. %*, about 11 *wt. %* to about 20 *wt. %*, about 21 *wt. %* to about 30 *wt. %*, about 31 *wt. %* to about 40 *wt. %*, about 41 *wt. %* to about 50 *wt. %*, about 51 *wt. %* to about 60 *wt. %*, about 61 *wt. %* to about 70 *wt. %*, about 71 *wt. %* to about 80 *wt. %*, about 81 *wt. %* to about 90 *wt. %*, about 91 *wt. %* to 99.9 *wt. %*.

According to one important embodiment of the disclosure which is not claimed as such, the synergistic preservative composition comprises: (i) propylene carbonate; (ii) one or more organic compounds and additionally one or more preservative compounds. Non-limiting examples of additional preservatives employed are selected from the group consisting of triclosan, 2-methyl-4-isothiazolin-3-one (MIT), 1,2-benzisothiazolin-3-one (BIT), 5-chloro-2-methyl-4-isothiazolin-3-one (CMIT), 2-octyl-4-isothiazolin-3-one (OIT), 3-iodo-2-propynylbutyl-carbamate (IPBC),, 3-iodopropynyl-N-phenyl carbamate (IPPC), zinc pyrithione (ZnPy), bronopol, quaternary ammonium compounds, parabens, alkyl parabens, chlorophenisin, benzyl alcohol, organic acids, sorbic acid and their salts, benzoic acid and their salts, salicylic and their salts, potassium sorbate, sodium benzoate, phenoxyethanol, diazolidinyl urea, imidazolidinyl urea, sodium hydroxymethyl glycinate, hydantoins, sodium pyrithione, phenyl ethanol, phenyl propanol, benzalkonium quaternary ammonium compounds, benzethonium chloride (BZT), dequalinium chloride, fatty acids and their salts, $\alpha$-hydroxy acids and their salts, beta acids and their salts, glycerols, hexyl glycerine, tropolones, sisquiterpenes, chlorhexidine, polyhexamethylene biguanide, cetrimide, ehloroeresol, chlorxylenol, benzyl alcohol, bronopol, chlorbutanol, phenylethyl alcohol, formaldehyde releasing compounds, phenolic compounds, 2,4-dichlorobenzyl alcohol, thiomersal and/or ethyl hexyl glycerine.

Other non-limiting embodiments of the disclosure which are not claimed as such employ herbal extracts or mixture of herbal extracts as a preservative or preservative system, and wherein, specific herbal extracts include, but are not limited to, extracts of chamomile, rosemary, aloe, nettle, centella asiatica, ginkgo biloba, betula, witch hazel, green tea, flavonoids (quercetin, naringenin, naringin, hesperidin) extracts, white tea, grape skin, grape seed, grapefruit, grapefruit seed, grapefruit peel, citrus fruits (other than grapefruit extract) bilberry, blueberry, Ginkgo biloba, soy isoflavones, soy extract, fermented soy protein, black cohosh, St. John's wort, echinacea, chamomile, rosemary, aloe extract and juice, nettle, coconut fruit and centella asiatica.

In accordance with another embodiment of the disclosure which is not claimed as such, the amount of addition preservatives employed in the present application includes, but is not limited to, about 0.1 *wt. %* to about 10 *wt. %*, about 11 *wt. %* to about 20 *wt. %*, about 21 *wt. %* to about 30 *wt. %*, about 31 *wt. %* to about 40 *wt. %*, about 41 *wt. %* to about 50 *wt. %*, about 51 *wt. %* to about 60 *wt. %*, about 61 *wt. %* to about 70 *wt. %*, about 71 *wt. %* to about 80 *wt. %*, about 81 *wt. %* to about 90 *wt. %*, about 91 *wt. %* to about 99.9 *wt. %* of at least one preservative selected from the above.

.According to another embodiment of the present application, the synergistic combination of organic compounds or synergistic combination of preservative compounds are identified according to their ability or selectivity to kill or inhibit the specific microbial organisms. Such selectivity is identified based on series of experiments that can readily be carried out by the skilled artisan.

Preservative composition of present application is stable on storage for at least 2 years at room temperature. Further, the composition is capable of withstanding heat and cold exposure, wherein the composition is stable for at least 5 freeze/thaw cycles when the temperature is cycled from 50°C to -24°C in every 24 hours or stable for at least 4 weeks at about 50°C.

The synergistic preservative compositions can be aqueous or non-aqueous in nature, and they can be delivered through different formulations technique that are known in the prior art, wherein the non-limiting exemplary formulations would include emulsion, microemulsion, nanoemulsion, solution, dispersion, suspension, complex coacervates, lamellar based delivery systems, liposome/niosome formulations, or concentrate.

Such formulated synergistic preservative composition comprising propylene carbonate and organic compound is used in various end-user based consumer applications, i.e. in cosmetic products, toiletry products, personal care products, oral care products, skin care products, hair care products, household & cleaning products, soap and bath products, industrial and institutional cleaning products, disinfecting products, wound care, sanitary products, agricultural compositions, textile industries, coating industries and/or laundry products. The amount of preservative composition employed in aqueous and non-aqueous based end-user products/compositions is in the range of from 0.01 *wt.* % to about 1.0 *wt.* % of the total composition. Other ranges include about 1.0 *wt.* % to about 2.0 *wt.* %, about 2.0 *wt.* % to about 3.0 *wt.* %, about 3.0 *wt.* % to about 4.0 *wt.* %, about 4.0 *wt.* % to 5.0 *wt.* %.

One important embodiment of the present application relate to a process for preparing the above-described synergistic preservative composition, wherein said process comprises mixing (i) 0.1 *wt.* % to 99.9 *wt.* % of propylene carbonate; and (ii) 0.1 *wt.* % to 99.9 *wt.* % of one or more organic compounds selected from the group consisting of hexanediol, octanediol and hexylglycerin.

Still another embodiment of the present application discloses a method of killing bacteria, fungi, molds, yeasts and viruses or inhibiting their growth in a cosmetic, personal care, house hold, cleaning, and/or Industrial & Institutional products those are susceptible to growth of microorganisms comprising incorporating into said products, 0.01 *wt.* % to 5.0 *wt.* % of preservative composition of present application.

Examples 1-47, 50-53 and 55-66 serve information purposes as to how preservative and end-user compositions may be manufactured. Obviously, compositions that do not contain both active ingredients in accordance with the requirements of claim 1 are not illustrative of the invention.

Examples 48, 49 and 54 serve to illustrate the synergistic effect of the preservative composition as part of the end-user compositions as claimed.

**Example 1:**

| S.No | Ingredients | *wt.* % |
|------|-------------|---------|
| 1 | Propylene Carbonate | 60.00 |
| 2 | 1,2-Hexanediol | 40.00 |
| | Total | 100.00 |

**Example 2:**

| S.No | Ingredients | *wt.* % |
|------|-------------|---------|
| 1 | Propylene Carbonate | 55.00 |
| 2 | 1,2-Octanediol | 45.00 |
| | Total | 100.00 |

**Example 3:**

| S.No | Ingredients | *wt.* % |
|------|-------------|---------|
| 1 | Propylene Carbonate | 60.00 |
| 2 | Cyclohexyl Glycerin | 40.00 |
| | Total | 100.00 |

**Example 4:**

| S.No | Ingredients | *wt.* % |
|------|-------------|---------|
| 1 | Propylene Carbonate | 60.00 |

(continued)

| S.No | Ingredients | wt. % |
|------|-------------|-------|
| 2 | 1,2-Hexanediol | 35.00 |
| 3 | 1,2 Decanediol | 5.00 |
| | Total | 100.00 |

**Example 5:**

| S.No | Ingredients | wt. % |
|------|-------------|-------|
| 1 | Propylene Carbonate | 62.00 |
| 2 | 1,2-Octanediol | 30.00 |
| 3 | 1,2 Decanediol | 8.00 |
| | Total | 100.00 |

**Example 6:**

| S.No | Ingredients | wt. % |
|------|-------------|-------|
| 1 | Propylene Carbonate | 45.00 |
| 2 | 1,2-Octanediol | 25.00 |
| 3 | 1,2 Hexanediol | 30.00 |
| | Total | 100.00 |

**Example 7:**

| S.No | Ingredients | wt. % |
|------|-------------|-------|
| 1 | Propylene Carbonate | 42.00 |
| 2 | 1,2-Octanediol | 20.00 |
| 3 | 1,2 Hexanediol | 23.00 |
| 4 | 1,2-Decanediol | 7.00 |
| 5 | Water | 8.00 |
| | Total | 100.00 |

**Example 8:**

| S.No | Ingredients | wt. % |
|------|-------------|-------|
| 1 | Propylene Carbonate | 40.00 |
| 2 | 1,2-Octanediol | 17.00 |
| 3 | 1,2 Hexanediol | 20.00 |
| 4 | 1,3 Propanediol | 15.00 |
| 5 | Water | 8.00 |
| | Total | 100.00 |

**Example 9:**

| S.No | Ingredients | wt. % |
|------|-------------|-------|
| 1 | Propylene Carbonate | 30.00 |
| 2 | Propylene Glycol Monoheptanoate | 20.00 |
| 3 | 1,2 Hexanediol | 20.00 |
| 4 | 1,3 Propanediol | 15.00 |
| 5 | Water | 15.00 |
| | Total | 100.00 |

**Example 10:**

| S.No | Ingredients | wt. % |
|------|-------------|-------|
| 1 | Propylene Carbonate | 38.00 |
| 2 | 1,2-Octanediol | 25.00 |
| 3 | 1,2 Hexanediol | 11.00 |
| 4 | 1,3 Propanediol | 10.00 |
| 5 | 1,2-Decanediol | 7.00 |
| 6 | Water | 9.00 |
| | Total | 100.00 |

**Example 11:**

| S.No | Ingredients | wt. % |
|------|-------------|-------|
| 1 | Water | 9.00 |
| 2 | Propylene Carbonate | 38.00 |
| 3 | 1,3 Propanediol | 10.00 |
| 4 | 1,2-Octanediol | 25.00 |
| 5 | 1,2 Hexanediol | 11.00 |
| 6 | 1,2 Decanediol | 7.00 |
| | Total | 100.00 |

**Example 12:**

| S.No | Ingredients | wt. % |
|------|-------------|-------|
| 1 | Water | 20.00 |
| 2 | Propylene Carbonate | 15.00 |
| 3 | 1,3 Propanediol | 15.00 |
| 4 | 1, 2 Hexanediol | 20.00 |
| 5 | Glyceryl Mono/Di Caprylate; Propylene Mono/Di Caprylate | 20.00 |
| 6 | 1,2 Decanediol | 10.00 |
| | Total | 100.00 |

**Example 13:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |
| 5 | 1,2 Hexanediol | 9.90 |
| 6 | 1,2 Decanediol | 6.30 |
| 7 | Sorbic Acid/K Sorbate | 10.00 |
| | Total | 100.00 |

**Example 14:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |
| 5 | 1,2 Hexanediol | 9.90 |
| 6 | 1,2 Decanediol | 6.30 |
| 7 | Salicylic acid/Na Salicylate | 10.00 |
| | Total | 100.00 |

**Example 15:**

| S.No | Ingredients | wt. % |
|------|-------------|-------|
| 1 | Water | 8.25 |
| 2 | Propylene Carbonate | 36.00 |
| 3 | 1,3 Propanediol | 9.50 |
| 4 | 1,2-Octanediol | 23.75 |
| 5 | 1,2 Hexanediol | 10.50 |
| 6 | 1,2 Decanediol | 6.75 |
| 7 | Dehydroacetic Acid | 5.25 |
| | Total | 100.00 |

**Example 16:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |

(continued)

| S.No | Ingredients | wt. % |
|------|-------------|-------|
| 5 | 1,2 Hexanediol | 9.90 |
| 6 | 1,2 Decanediol | 6.30 |
| 7 | Benzoic acid/Na Benzoate | 10.00 |
| | Total | 100.00 |

**Example 17:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |
| 5 | 1,2 Hexanediol | 9.90 |
| 6 | 1,2 Decanediol | 6.30 |
| 7 | Octanoic Acid/Na Octanoate | 10.00 |
| | Total | 100.00 |

**Example 18:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |
| 5 | 1,2 Hexanediol | 9.90 |
| 6 | 1,2 Decanediol | 6.30 |
| 7 | Cinnamaldehyde | 10.00 |
| | Total | 100.00 |

**Example 19:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |
| 5 | 1,2 Hexanediol | 9.90 |
| 6 | 1,2 Decanediol | 6.30 |
| 7 | Benzaldehyde | 10.00 |
| | Total | 100.00 |

**Example 20:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |
| 5 | 1,2 Hexanediol | 9.90 |
| 6 | 1,2 Decanediol | 6.30 |
| 7 | n-Undecanal | 10.00 |
| | Total | 100.00 |

**Example 21:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |
| 5 | 1,2 Hexanediol | 9.90 |
| 6 | 1,2 Decanediol | 6.30 |
| 7 | n-Undecanol | 10.00 |
| | Total | 100.00 |

**Example 22:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |
| 5 | 1,2 Hexanediol | 9.90 |
| 6 | 1,2 Decanediol | 6.30 |
| 7 | Methyl Propanediol | 10.00 |
| | Total | 100.00 |

**Example 23:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |

(continued)

| S.No | Ingredients | wt. % |
|------|-------------|-------|
| 5 | 1,2 Hexanediol | 9.90 |
| 6 | 1,2 Decanediol | 6.30 |
| 7 | Phenethyl alcohol | 10.00 |
| | Total | 100.00 |

**Example 24:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |
| 5 | 1,2 Hexanediol | 9.90 |
| 6 | 1,2 Decanediol | 6.30 |
| 7 | glyceryl caprylate | 10.00 |
| | Total | 100.00 |

**Example 25:**

| S.No | Ingredients | wt. % |
|------|-------------|-------|
| 1 | Water | 8.10 |
| 2 | Propylene Carbonate | 34.20 |
| 3 | 1,3 Propanediol | 9.00 |
| 4 | 1,2-Octanediol | 22.50 |
| 5 | 1,2 Hexanediol | 9.90 |
| 6 | 1,2 Decanediol | 6.30 |
| 7 | Glycerol Monolaurate | 10.00 |
| | Total | 100.00 |

**Example 26:**

| S.No | Ingredients | wt. % |
|------|-------------|-------|
| 1 | Water | 9.00 |
| 2 | Propylene Carbonate | 35.00 |
| 3 | 1,3 Propanediol | 10.00 |
| 4 | 1,2-Octanediol | 23.00 |
| 5 | 1,2 Hexanediol | 11.00 |
| 6 | 1,2 Decanediol | 7.00 |
| 7 | Cetrimonium Chloride | 5.00 |
| | Total | 100.00 |

**Example 27:**

| S.No | Ingredients | wt. % |
|---|---|---|
| 1 | Water | 20.00 |
| 2 | Propylene Carbonate | 15.00 |
| 3 | 1,3 Propanediol | 15.00 |
| 4 | 1, 2 Hexanediol | 20.00 |
| 5 | Glyceryl Mono/Di Caprylate; Propylene Mono/Di Caprylate | 20.00 |
| 6 | 1,2 Decanediol | 10.00 |
| | Total | 100.00 |

**Example 28:**

| S.No | Ingredients | wt. % |
|---|---|---|
| 1 | PVP-K90 | 1.0 |
| 2 | Propylene Carbonate | 78.0 |
| 3 | 1,3 Propanediol | 5.0 |
| 4 | Benzoic acid | 8.0 |
| 5 | Dehydroacetic Acid | 8.0 |
| | Total | 100.0 |

**Example 29:**

| S.No. | Ingredients | wt % |
|---|---|---|
| 1 | Propylene Carbonate | 38.0 |
| 2 | 1,2 Octanediol | 25.0 |
| 3 | 1,2 Hexanediol | 11.0 |
| 4 | 1,3 Propanediol | 10.0 |
| 5 | Decanediol | 7.0 |
| 6 | Water | 9.0 |
| | Total | 100.0 |

**Example 30:**

| S.No. | Ingredients | wt. % |
|---|---|---|
| 1. | Water | 25.0 |
| 2. | Propylene Carbonate | 25.0 |
| 3. | Polyglycery-4-Laurate/Sebacate (and) Polyglyceryl-6, Caprylate/Capriate (and) Water | 5.0 |
| 4. | 1,2-Octanediol | 30.0 |
| 5. | 1,2-Decanediol | 15.0 |
| | Total | 100.00 |

**Example 31:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Capryl Hydroxamic Acid | 10.00 |
| | Total | 100.00 |

**Example 32:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | O-cymen-5-ol | 10.00 |
| | Total | 100.00 |

**Example 33:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | C-6 Alkyl Glycoside | 10.00 |
| | Total | 100.00 |

**Example 34:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | DL-Menthol | 10.00 |
| | Total | 100.00 |

**Example 35:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Propionic Acid | 10.00 |
| | Total | 100.00 |

**Example 36:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Phenethyl Alcohol | 10.00 |
| | Total | 100.00 |

**Example 37:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Sorbohydroxamic Acid | 10.00 |
| | Total | 100.00 |

**Example 38:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Benzohydroxamic Acid | 10.00 |
| | Total | 100.00 |

**Example 39:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Coco-Glucoside | 10.00 |
| | Total | 100.00 |

**Example 40:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Lauryl Glucoside | 10.00 |
| | Total | 100.00 |

**Example 41:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Decyl Glucoside | 10.00 |
| | Total | 100.00 |

**Example 42:**

| S.No. | Ingredients | wt. % |
|---|---|---|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Piroctone Olamine | 10.00 |
| | Total | 100.00 |

**Example 43:**

| S.No. | Ingredients | wt. % |
|:---:|---|:---:|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | 4-Allyl-2-(5-allyl-2-hydroxy-phenyl) Phenol | 10.00 |
| | Total | 100.00 |

**Example 44:**

| S.No. | Ingredients | wt. % |
|:---:|---|:---:|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Hexamidine Diisethionate | 10.00 |
| | Total | 100.00 |

**Example 45:**

| S.No. | Ingredients | wt. % |
|:---:|---|:---:|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | 18β Glycyrrhetiric Acid | 10.00 |
| | Total | 100.00 |

**Example 46:**

| S.No. | Ingredients | wt. % |
|:---:|---|:---:|
| 1. | Water | 22.5 |
| 2. | Propylene Carbonate | 22.5 |
| 3. | Polyglycery-4-Laurate/Sebacate (and) Polyglyceryl-6, Caprylate/Capriate (and) Water | 4.50 |
| 4. | 1,2-Octanediol | 27.50 |
| 5. | 1,2-Decanediol | 13.50 |
| 6. | Glucono-Delta-Lactone | 10.00 |

(continued)

| S.No. | Ingredients | *wt*. % |
|---|---|---|
| | Total | 100.00 |

**Example 47:** Cumulative synergistic activity

The cumulative synergistic activity of propylene carbonate, organic compounds/preservative compounds are performed against selected microbial strains. The synergism of two-component compositions is demonstrated by testing a wide range of concentrations and ratios of compounds as follows.

Tryptic Soy Broth (TSB) media was used for bacterial evaluations and Yeast Malt Broth (YMB) for fungal evaluations. The compounds were added to the media and serially diluted. After serially diluting the media, 100μl of a suspension of the testing bacteria or fungi were added to a final concentration of approximately $10^{6\,-5}$CFU/ml. The inoculated media was then incubated at 32°C for 2-5 days for bacteria or at 28°C for 3-7 days for fungi.

The lowest concentration of each compound or mixture or compounds to inhibit visible growth was taken as the minimum inhibitory concentration (MIC). The MIC was taken as end points of activity. End points for the mixture of compound A (Propylene Carbonate) and compound B (organic compounds/conventional preservative) were then compared with the end points for the pure active ingredient alone.

Synergism was determined by a commonly used and accepted method described by Kull A.C,; Eisman, P.C.; Sylwestrowicz, H.D. and Mayer, R.L. 1961. Applied Microbiology, 9:538 - 541 using the ratio determine by:

$$Qa/QA + Qb/QB = synergy$$

Wherein:

- QA is the concentration of compound A in PPM, acting alone, which produced an end point.
- Qa is the concentration of compound A in PPM, in the mixture, which produced an end point.
- QB is the concentration of compound B in PPM, acting alone, which produced an end point.
- Qb is the concentration of compound B in PPM, in the mixture, which produced an end point

When the sum of Qa/QA + Qb/QB is greater than one, antagonism is indicated. When the sum is equal to one, additive is indicated. When the sum is less than one, synergism is demonstrated.

The experiments were performed to understand the cumulative synergistic effect between propylene carbonate, organic compounds and preservative compounds.

The results of cumulative synergism between propylene carbonate and organic compounds/preservative compounds are shown in Examples 48 through 64.

The results comprise following parameters: 1. Test organism (bacteria or fungi), 2. The end-point activity in % measured by MIC for the compound A alone (QA), for compound A in the mixture (Qa), for compound B alone (QB), for compound B in the mixture (Qb), 3. The ratio of Propylene carbonate or combinations of propylene carbonate and an organic compound (compound A) to organic compound (compound B) in that particular combination and the synergy index (SI) based on the formula SI = Qa/QA + Qb/QB.

**Example 48:** Evaluation of Propylene carbonate vs. 1,2-hexanediol

| Microorganism | PC (A) (%) | PC (a) (%) | HD (B) (%) | HD (b) (%) | Ratio A:B | SI |
|---|---|---|---|---|---|---|
| **Bacteria:** | | | | | | |
| *E. coli* (ATCC 8739) | 3.12 | 1.56 | 1.25 | 0.625 | 2.5:1 | 1 |
| *S. aureus* (ATCC 6538) | 12.5 | 6.25 | 2.5 | 1.25 | 5:01 | 1 |
| *B.cepacia* (ATCC 25416) | 3.12 | 1.56 | 0.625 | 0.312 | 5:01 | 1 |
| *P.aeruginosa* (ATCC 9027) | 3.12 | 0.78 | 1.25 | 0.625 | 2.5:1 | 0.75 |
| | 3.12 | 1.56 | 1.25 | 0.156 | 2.5:1 | 0.63 |
| **Fungi:** | | | | | | |

(continued)

| Microorganism | PC (A) (%) | PC (a) (%) | HD (B) (%) | HD (b) (%) | Ratio A:B | SI |
|---|---|---|---|---|---|---|
| *A. brasilensis* (ATCC 16404) | 1.56 | 0.78 | 1.25 | 0.625 | 1.25: 1 | 1 |

**Example 49:** Evaluation of Propylene carbonate vs. 1,2 octanediol

| Microorganism | PC (A) (%) | PC (a) (%) | OD (B) (%) | OD (b) (%) | Ratio A:B | SI |
|---|---|---|---|---|---|---|
| **Bacteria:** | | | | | | |
| *E. coli* (ATCC 8739) | - | - | - | - | - | - |
| *S. aureus* (ATCC 6538) | 3.12 | 1.56 | 0.625 | 0.312 | 5:1 | 1 |
| *B.cepacia* (ATCC 25416) | - | - | - | - | - | - |
| *P.aeruginosa* (ATCC 9027) | 3.12 | 1.56 | 0.625 | 0.312 | 5:1 | 1 |
| **Fungi:** | | | | | | |
| *A. brasilensis* (ATCC 16404) | 1.56 | 0.39 | 0.312 | 0.156 | 5:1 | 0.75 |
| | 1.56 | 0.78 | 0.312 | 0.078 | 5:1 | 0.75 |

**Example 50:** Evaluation of Propylene carbonate + Octanediol (ratio 4:1) vs. Hexanediol

| Microorganism | PC/OD (A) (%) | PC/OD (a) (%) | HD (B) (%) | HD (b) (%) | Ratio A:B | SI |
|---|---|---|---|---|---|---|
| **Bacteria:** | | | | | | |
| *E. coli* (ATCC 8739) | 1.25 | 0.625 | 1.25 | 0.313 | 1:1 | 0.75 |
| | 1.25 | 0.312 | 1.25 | 0.625 | 1:1 | 0.75 |
| *S. aureus* (ATCC 6538) | 1.25 | 0.625 | 2.5 | 0.625 | 1:2 | 0.75 |
| | 1.25 | 0.312 | 2.5 | 1.25 | 1:2 | 0.75 |
| *B.cepacia* (ATCC 25416) | 1.25 | 0.625 | 0.625 | 0.312 | 4:1 | 0.75 |
| | 1.25 | 0.312 | 0.625 | 0.312 | 4:1 | 0.75 |
| *P.aeruginosa* (ATCC 9027) | 2.5 | 1.25 | 1.25 | 0.312 | 2:1 | 0.75 |
| | 2.5 | 0.625 | 1.25 | 0.625 | 2:1 | 0.75 |
| **Fungi:** | | | | | | |
| *A. brasilensis* (ATCC 16404) | 0.625 | 0.312 | 1.25 | 0.312 | 1:2 | 0.75 |
| | 0.625 | 0.156 | 1.25 | 0.626 | 1:2 | 0.75 |

**Example 51:**Evaluation of Propylene carbonate + Octanediol (ratio 4:1) vs Decanediol

| Microorganism | PC/OD (A) (%) | PC/OD (a) (%) | DD (B) (%) | DD (b) (%) | Ratio A:B | SI |
|---|---|---|---|---|---|---|
| **Bacteria:** | | | | | | |
| *E. coli* (ATCC 8739) | 1.25 | 0.625 | 0.0625 | 0.004 | 20:1 | 0.56 |
| | 1.25 | 0.04 | 0.0625 | 0.031 | 20:1 | 0.53 |
| *S. aureus* (ATCC 6538) | 1.25 | 0.312 | 0.0312 | 0.0156 | 40:1 | 0.75 |
| *B.cepacia* (ATCC 25416) | 1.25 | 0.625 | 0.0625 | 0.0078 | 20:1 | 0.63 |
| | 1.25 | 0.156 | 0.0625 | 0.0312 | 20:1 | 0.63 |
| *P.aeruginosa* (ATCC 9027) | 2.5 | 1.25 | >2.5 | 0.031 | <1:1 | <0.51 |

(continued)

| Microorganism | PC/OD (A) (%) | PC/OD (a) (%) | DD (B) (%) | DD (b) (%) | Ratio A:B | SI |
|---|---|---|---|---|---|---|
| *Fungi:* | | | | | | |
| A. brasilensis (ATCC 16404) | 0.625 | 0.312 | 0.0156 | 0.0039 | 40:1 | 0.75 |
| | 0.625 | 0.078 | 0.0156 | 0.0078 | 40:1 | 0.63 |

**Example 52:** Evaluation of Propylene carbonate + Hexanediol (ratio 1.5:1) vs Decanediol

| Microorganism | PC/HD (A) (%) | PC/HD (a) (%) | DD (B) (%) | DD (b) (%) | Ratio A:B | SI |
|---|---|---|---|---|---|---|
| **Bacteria:** | | | | | | |
| *E. coli* (ATCC 8739) | 2.5 | 1.25 | 0.0312 | 0.0156 | 80:1 | 1 |
| *S. aureus* (ATCC 6538) | >2.5 | 2.5 | 0.0156 | 0.0078 | > 160:1 | <1.0 |
| *B.cepacia* (ATCC 25416) | 1.25 | 0.625 | 0.0625 | 0.0156 | 20:01 | 0.75 |
| | 1.25 | 0.312 | 0.0625 | 0.0312 | 20:01 | 0.75 |
| *P.aeruginosa* (ATCC 9027) | 2.5 | 1.25 | >2.5 | 0.0156 | <10:1 | >0.6 |
| **Fungi:** | | | | | | |
| *A. brasilensis* (ATCC 16404) | 2.5 | 1.25 | 0.0156 | 0.002 | 160:1 | 0.62 |
| | 2.5 | 0.156 | 0.0156 | 0.0078 | 160:1 | 0.56 |

**Example 53:** Evaluation of Propylene carbonate vs Hexylglycerine

| Microorganism | PC (A) (%) | PC (a) (%) | HG (B) (%) | HG (b) (%) | Ratio A:B | SI |
|---|---|---|---|---|---|---|
| **Fungi:** | | | | | | |
| *A. brasilensis* (ATCC 16404) | 3.12 | 1.56 | 0.156 | 0.039 | 20:1 | 1 |

**Example 54:** Evaluation of Propylene carbonate + Hexylglycerine (ratio 5:1) vs DD

| Microorganism | PC/HG (A) (%) | PC/HG (a) (%) | DD (B) (%) | DD (b) (%) | Ratio A:B | SI |
|---|---|---|---|---|---|---|
| **Fungi:** | | | | | | |
| *A. brasilensis* (ATCC 16404) | 1.9 | 0.95 | 0.008 | 0.0009 | 240:1 | 0.61 |
| | 1.9 | 0.23 | 0.008 | 0.004 | 240:1 | 0.62 |

**Example 55:** Evaluation of Propylene carbonate + cyclohexylglycerin (ratio 1.5:1) vs DD

| Microorganism | PC/CHG (A) (%) | PC/CHG (a) (%) | DD (B) (%) | DD (b) (%) | Ratio A:B | SI |
|---|---|---|---|---|---|---|
| **Fungi:** | | | | | | |
| *A. brasilensis* (ATCC 16404) | 2.5 | 0.625 | 0.0156 | 0.0078 | 160:1 | 0.75 |
| | 2.5 | 1.25 | 0.0156 | 0.0009 | 160:1 | 0.55 |

**Example 56:** Evaluation of Propylene carbonate + Capryl Hydroxamic acid

| Microorganism | PC (A) (%) | PC (a) (%) | CHA (B) (%) | CHA (b) (%) | Ratio A:B | SI |
|---|---|---|---|---|---|---|
| **Fungi:** | | | | | | |
| *A. brasilensis* (ATCC 16404) | 0.78 | 0.39 | 0.031 | 0.0075 | 25:1 | 0.75 |
| **Bacteria:** | | | | | | |
| *S.Aureus (ATCC#6538)* | 6.25 | 3.12 | 0.125 | 0.0625 | 50:1 | 1 |
| *E.Coli (ATCC#8739)* | 1.56 | 0.78 | 0.031 | 0.0156 | 50:1 | 1 |

**Example 57:** Evaluation of Propylene carbonate + Undecanal (UND)

| Microorganism | PC (A) (%) | PC (a) (%) | UND (B) (%) | UND (b) (%) | Ratio A:B | SI |
|---|---|---|---|---|---|---|
| **Fungi:** | | | | | | |
| *A. brasilensis* (ATCC 16404) | 1.56 | 0.39 | 1.25 | 0.312 | 1.25: 1 | 0.50 |

**Example 58:** Evaluation of Propylene carbonate + O-cymen-5-ol (DBL)

| Microorganism | PC (A) (%) | PC (a) (%) | DBL (B) (%) | DBL (b) (%) | Ratio A:B | SI |
|---|---|---|---|---|---|---|
| **Bacteria:** | | | | | | |
| *E. coli* (ATCC 8739) | 6.25 | 0.78 | 0.0625 | 0.3125 | 100:1 | 0.625 |

**Example 59:** Evaluation of Propylene carbonate + Alkyl Glucoside (AG6206)

| Microorganism | PC (A) (%) | PC (a) (%) | AG6206 (B) (%) | AG6206 (b) (%) | Ratio A:B | SI |
|---|---|---|---|---|---|---|
| **Bacteria:** | | | | | | |
| *P. aeruginosa* (ATCC 9027) | 3.12 | 1.56 | 3.12 | 0.39 | 1:1 | 0.625 |

**Example 60:** Evaluation of Propylene carbonate + DL-menthol (DLM)

| Microorganism | PC (A) (%) | PC (a) (%) | DLM (B) (%) | DLM (b) (%) | Ratio A:B | SI |
|---|---|---|---|---|---|---|
| **Bacteria:** | | | | | | |
| *E. coli* (ATCC 8739) | 3.12 | 1.56 | 1.39 | 0.17 | 2.25:1 | 0.62 |
| *S. aureus* (ATCC 6538) | 6.25 | 0.10 | 0.69 | 035 | 9:1 | 0.52 |
| *B. cepacia* (ATCC 25416) | 1.56 | 0.78 | 0.69 | 0.17 | 2.25:1 | 0.75 |

**Example 61:** Evaluation of Propylene carbonate vs. Propionic acid (PA)

| Microorganism | PC (A) (%) | PC (a) (%) | PA (B) (%) | PA (b) (%) | Ratio A:B | SI |
|---|---|---|---|---|---|---|
| **Bacteria:** | | | | | | |
| *B.cepacia* (ATCC 25416) | 3.12 | 0.78 | 0.20 | 0.10 | 15.6:1 | 0.75 |
| **Fungi:** | | | | | | |
| *A. brasilensis* (ATCC 16404) | 3.12 | 1.56 | 0.078 | 0.01 | 40:1 | 0.62 |

**Example 62:** Evaluation of Propylene carbonate vs. Phenethyl Alcohol (PhA)

| Microorganism | PC (A) (%) | PC (a) (%) | PhA (B) (%) | PhA (b) (%) | Ratio A:B | SI |
|---|---|---|---|---|---|---|
| **Bacteria:** | | | | | | |
| *B.cepacia* (ATCC 25416) | 3.12 | 1.56 | 0.156 | 0.02 | 20:1 | 0.62 |
| **Fungi:** | | | | | | |
| *C. albicans* (ATCC 10231) | 6.25 | 1.56 | 0.625 | 0.312 | 10:1 | 0.75 |

**Example 64:** Evaluation of Propylene carbonate vs. *o*-Cymen-5-ol (DBL)

| Microorganism | PC (A) (%) | PC (a) (%) | DBL (B) (%) | DBL (b) (%) | Ratio A:B | SI |
|---|---|---|---|---|---|---|
| **Bacteria:** | | | | | | |
| *E.coli ATCC# 8739* | 6.25 | 3.12 | 0.0625 | 0.0078 | 100:1 | 0.625 |
| | 6.25 | 0.78 | 0.0625 | 0.031 | 100:1 | 0.625 |

**Example 65:** Evaluation of preservative compositions in commercial prolipid lamellar composition

A standard Prolipid lamellar composition was engaged to test efficacy of the preservative composition of present application in Phase D at 1% by *wt.* or no preservative used to serve as control for the evaluation. The formulations employed for the evaluation test are disclosed in Examples 13, 14, 15, 28 and 29.

The results of efficacy test for the synergistic composition demonstrated that the composition is capable of killing gram positive and gram negative bacterial strains, yeast and fungi.

| INCI NAME | Ingredients | %w/w |
|---|---|---|
| *Phase A* | Water | 80 |
| | Disodium EDTA | 0.05 |
| | Triethanolamine 99% | 0.05 |
| | 2-Propenic Acid, polymer with 1-ethylenyl-2-pyrolidinone and 3-(2-propenyloxy)-2, 2-bis (2-propenyloxy)methyl)-1-propanol | 0.5 |
| | Glycerin | 5 |

(continued)

| INCI NAME | Ingredients | %w/w |
|---|---|---|
| Phase B | Glyceryl Stearate (and) Behenyl Alcohol (and) Palmitic Acid (and) Stearic Acid (and) Lecithin (and) Lauryl Alcohol (and) Myristyl Alcohol (and) Cetyl Alcohol | 4.5 |
| | Myristyl Myristate (and) | 4 |
| | Myristyl Laurate | 2 |
| | Dimethicone | 3 |
| | Glyceral Dilaurate | 1 |
| Phase C | Vital-ET | 1.5 |
| | Triethanolamine 99% | 0.15 |
| Phase D | Preservative | 1 |
| Total | | 100 |

The prolipid lamellar composition were evaluated with preservative compositions of Examples 13, 14, 15, or 28 at 1% or no preservative (control) for the challenge test against several microorganisms following a 28 day double inoculation tests, where the samples were inoculated with either *Gram* positive bacteria (*Staphylococcus aureus* 6538), a composite of *Gram* negative bacteria *(Escherichia coli* 8739, *Pseudomonas aeruginosa* 9027 and *Burkholderia cepacia* 25416), whereas the bacteria is inoculated at day 0 and day 21 to a final concentration of about 10^6-7 *cfu/ml* and the fungal composite is inoculated at day 0 and day 21 to a final concentration of about 10^5-6 *spores/ml.* The inoculated samples were plated at days 2, 7, 14, 21 and 28. The recovery media is Letheen Agar for bacteria and Potato Dextrose agar for fungi. The microorganisms recovered at each time interval are shown in the following **Table 1.**

**Table 1:** Preservative Evaluation Test of Proplipid lamellar composition

| Treatment | Microbial strains | Day 2 | Day 7 | Day 14 | Day 21 | Day 28 |
|---|---|---|---|---|---|---|
| No preservative (**Control**) | Gram (+) bacteria | 3.6 E^6 | >1E4 | 9.8 E 3 | 5.0 E 3 | >1E4 |
| | Gram (-) bacteria | > 1E6 | >1E4 | >1E4 | >1E4 | >1E4 |
| | Yeast and mold | 1.3 E^6 | > 1 E4 | >1E4 | >1E4 | >1E4 |
| Example 14 at 1% | Gram (+) bacteria | <10 | <10 | <10 | <10 | <10 |
| | Gram (-) bacteria | <10 | <10 | <10 | <10 | <10 |
| | Yeast and mold | 1.0 E^5 | 3.7 E 4 | 4.7 E 4 | >1E4 | 1.8 E5 |
| Example 13 at 1% | Gram (+) bacteria | <10 | <10 | <10 | <10 | <10 |
| | Gram (-) bacteria | <10 | <10 | <10 | <10 | <10 |
| | Yeast and mold | 1.2E^4 | < 10 | <10 | <10 | <10 |
| Example 15 at 1% | Gram (+) bacteria | <10 | <10 | <10 | <10 | <10 |
| | Gram (-) bacteria | <10 | <10 | <10 | <10 | <10 |
| | Yeast and mold | 4.7 E^4 | 1.7 E 4 | 1.4 E 3 | 1.0 E 2 | 1.4 E 4 |
| Example 28 at 1% | Gram (+) bacteria | 1.8 E 3 | < 10 | < 10 | < 10 | < 10 |
| | Gram (-) bacteria | 1.2E 3 | < 10 | < 10 | < 10 | < 10 |
| | Yeast and mold | 1.6 E 3 | 1.2 E 2 | 6.0 E 1 | 1.0 E 1 | 3.0 E 1 |

As shown in the **Table 1**, the prolipid lamellar composition containing formulations of Examples 13, 14, 15 or 28 at 1% by wt., have significantly reduced the levels of inoculated bacteria and inhibited their growth. Furthermore, the Prolipid lamellar compositions containing compositions of Examples 13 or 28 were also found to be very effective in controlling yeast and mold growth, wherein the unpreserved control sample was susceptible to significant microbial growth.

**Example 66:** Evaluation of Baby wipe Juice composition

A standard Baby juice composition as described below was prepared, and wherein, a preservative composition of Example 29 was incorporated as phase D at 1.5% by *wt*. or no preservative to serve as a control.

| INCI NAME | Ingredients | %w/w |
|---|---|---|
| *Phase A* | DI Water<br>Citric Acid 10% *aq.* | 97.9<br>0.5 |
| *Phase B* | Tween 20 (Liposorb 20)<br>Vitamin E (Vital ET)<br>Fragrance (Petal Avalanch) | 0.2<br>0.05<br>0.05 |
| *Phase C* | Si Tec DMC 6031<br>Glycerine | 0.1<br>0.5 |
| *Phase D* | NaOH 10% aq. (adjust pH)<br>Preservative | 0.2<br>0.5 |
| | Total | 100 |

The Baby Juice composition containing composition of Example 29 at 1.5% or no preservative (*control*) in a cellulosic wipe were then challenged with microorganisms following a 21 day inoculation tests, where the samples were inoculated with either *Gram* positive bacteria (*Staphylococcus aureus* 6538), a composite of *Gram* negative bacteria (*Escherichia coli* 8739, *Pseudomonas aeruginosa* 9027 and *Burkholderia cepacia* 25416), whereas the bacteria is inoculated at day 0 to a final concentration of about 10^6-7 *cfu/ml* and the fungal composite is inoculated at day 0 to a final concentration of about 10^5-6 *spores/ml.* The inoculated samples are plated at days 7, 14 and 21. The recovery media is Letheen Agar for bacteria and Potato Dextrose agar for fungi. The microorganisms recovered at each time interval are shown in the following **Table 2**. The Baby Juice composition containing composition of Example 29 at 1% or no preservative (control) in a cellulosic wipe were then challenged with microorganisms following a 21 day inoculation tests, where the samples are inoculated with either *Gram* positive bacteria (*Staphylococcus aureus* 6538), a composite *of Gram* negative bacteria (*Escherichia coli* 8739, *Pseudomonas aeruginosa* 9027 and *Burkholderia cepacia* 25416), whereas the bacteria is inoculated at day 0 to a final concentration of about 10^6-7 *cfu/ml* and the fungal composite is inoculated at day 0 to a final concentration of about 10^5-6 *spores/ml.* The inoculated samples are plated at days 7, 14 and 21. The recovery media is Letheen Agar for bacteria and Potato Dextrose agar for fungi. The microorganisms recovered at each time interval are shown in the following **Table 2.**

Table 2: Preservative Evaluation Test of Baby Wipe Juice composition

| Treatment | Microbial strains | Day 7 | Day 14 | Day 21 |
|---|---|---|---|---|
| Control/No preservative | Gram pos. bacteria | 3.7 E^5 | NA | NA |
| | Gram neg. bacteria | 7.7 E^6 | 1.7 E^7 | 3.4 E^7 |
| | Yeast and mold | 1.2 E^5 | 5.5 E^4 | 5 E^4 |
| Example 29 at 1% *wt*. | Gram pos. bacteria | <10 | <10 | <10 |
| | Gram neg. bacteria | 1 E^1 | <10 | <10 |
| | Yeast and mold | 1.2 E^2 | <10 | <10 |

As shown in **the Table 2,** the Baby wipe composition containing composition of example 29 at 1% by *wt.* has significantly reduced the levels of inoculated bacteria, yeast and mold and prevented their growth. The unpreserved control sample was susceptible to significant microbial growth.

**Shake Flask Method Test**

| Sample Description | 24 hours | LOG | LR | 48 hours | Log | LR | Dilution |
|---|---|---|---|---|---|---|---|
| - | 1.20E+09 | 9.1 | n/a | 1.10E+09 | 9.0 | n/a | |
| 90% Blend 100 and 10% glucolactone | 2.00E+02 | 2.3 | 6.8 | 4.50E+03 | 3.7 | 5.4 | 1% |

(continued)

| Sample Description | 24 hours | LOG | LR | 48 hours | Log | LR | Dilution |
|---|---|---|---|---|---|---|---|
| - | 1.20E+09 | 9.1 | n/a | 1.10E+09 | 9.0 | n/a | |
| 50% Blend 100, 30% water and 20% glucono lactone | 1.20E+03 | 3.1 | 6.0 | <10 | <1 | >8 | 1% |
| Blend 100 90% and 10% hydroxamic acid | <10 | <1 | >8 | <10 | <1 | >8 | 1% |
| 60% Blend 100, 10% hydroxamic acid, 10% glucono lactone, 20% water | 1.00E+01 | <1 | >8 | <10 | <1 | >8 | 1% |
| 90% blend 100, 5% hydroxamic acid and 5% glucono lactone | 1.00E+01 | <1 | >8 | <10 | <1 | >8 | 1% |
| Propylene carbonate 30%, octanediol 30%, Hydroxamic acid 5%, glucono lactone 10%, water 25% | <10 | <1 | >8 | <10 | <1 | >8 | 1% |
| Blend 100 | <10 | <1 | >8 | <10 | <1 | >8 | 1% |
| Propylene carbonate 30%, water 20%, octanediol 30% hyroxamic acid 10%, gluono lactone 10% | <10 | <1 | >8 | <10 | <1 | >8 | 1% |

*MEDIA Tested with bacterial composition - TSB pH 7

| Sample Description | 48 hours | Log | LR | 7 Days | Log | LR | Dilution |
|---|---|---|---|---|---|---|---|
| - | 2.00E+08 | 8.3 | n/a | 2.00E+09 | 9.3 | n/a | - |
| 90% Blend 100 and 10% glucolactone | 1.00E+01 | 1.0 | 8.0 | <10 | <1 | >8 | 1% |
| 50% Blend 100, 30% water and 20% glucono lactone | 4.00E+01 | <1 | >8 | <10 | <1 | >8 | 1% |
| Blend 100 90% and 10% hydroxamic acid | <10 | <1 | >8 | <10 | <1 | >8 | 1% |
| 60% Blend 100, 10% hydroxamic acid, 10% glucono lactone, 20% water | <10 | <1 | >8 | <10 | <1 | >8 | 1% |
| 90% blend 100, 5% hydroxamic acid and 5% glucono lactone | <10 | <1 | >8 | <10 | <1 | >8 | 1% |
| Propylene carbonate 30%, octanediol 30%, Hydroxamic acid 5%, glucono lactone 10%, water 25% | <10 | <1 | >8 | <10 | <1 | >8 | 1% |
| Blend 100 | <10 | <1 | >8 | <10 | <1 | >8 | 1% |
| Propylene carbonate 30%, water 20%, octanediol 30% hyroxamic acid 10%, gluono lactone 10% | <10 | <1 | >8 | <10 | <1 | >8 | 1% |

*MEDIA Tested with mold composition - TSB pH 7

**Claims**

1. Aqueous and non-aqueous based end-user compositions which

   (i) are selected from the group consisting of cosmetic products, toiletry products, personal care products, oral care products, skin care products, hair care products, household & cleaning products, soap and bath products, industrial and institutional cleaning products, disinfecting products, wound care, sanitary products, agricultural compositions, textile industries, coating industries and laundry products; and
   (ii) contain, in the range of from 0.01 *wt.* % to 5.0 *wt.* % of the total composition,

      - a synergistic preservative composition

(a) being capable of providing broad spectrum antimicrobial activity and of inhibiting or killing *Staphylococcus aureus, Escherichia coli, Pseudomonas aeruginosa, Aspergillus brasiliensis, Candida albicans* and/or *Burkhodelia cepacia,* and

(b) comprising 0.1 *wt.* % to 99.9 *wt.* % of propylene carbonate and 0.1 *wt.* % to 99.9 *wt.* % of one or more organic compounds selected from the group consisting of hexanediol, octanediol and hexylglycerin,

wherein the ratio of propylene carbonate to organic compounds is in the range of from 1:10 to 10:1.

2. The aqueous and non-aqueous based end-user compositions according to claim 1, wherein

- said synergistic preservative composition is aqueous or non-aqueous, or
- said synergistic preservative composition is an emulsion, microemulsion, nanoemulsion, solution, dispersion, suspension, complex coacervate, lamellar based delivery system, liposome/niosome formulation, or concentrate.

## Patentansprüche

1. Wässrige und nicht-wässrige Endverbraucherzusammensetzungen, die

(i) ausgewählt werden aus der Gruppe bestehend aus kosmetischen Produkten, Toilettenartikeln, Körperpflegeprodukten, Mundpflegeprodukten, Hautpflegeprodukten, Haarpflegeprodukten, Haushalts- und Reinigungsprodukten, Seifen- und Badeprodukten, industriellen und institutionellen Reinigungsprodukten, Desinfektionsprodukten, Wundpflegeprodukten, Sanitärprodukten, landwirtschaftlichen Zusammensetzungen, Textilindustrien, Beschichtungsindustrien und Wäscheprodukten; und
(ii) im Bereich von 0,01 Gew.-% bis 5,0 Gew.-%, bezogen auf die Gesamtzusammensetzung,

- eine synergistische Konservierungsmittelzusammensetzung,

a) die in der Lage ist, ein breites Spektrum an antimikrobieller Aktivität zur Verfügung zu stellen und *Staphylococcus aureus, Escherichia coli, Pseudomonas aeruginosa, Aspergillus brasiliensis, Candida albicans* und/oder *Burkhodelia cepacia* zu hemmen oder abzutöten, und
b) die 0,1 Gew.-% bis 99,9 Gew.-% Propylencarbonat und 0,1 Gew.-% bis 99,9 Gew.-% einer oder mehrerer organischer Verbindungen, die ausgewählt werden aus der Gruppe bestehend aus Hexandiol, Octandiol und Hexylglycerin, enthält,
wobei das Verhältnis von Propylencarbonat zu organischen Verbindungen im Bereich von 1:10 bis 10:1 liegt,

enthalten.

2. Die wässrigen und nicht-wässrigen Endverbraucherzusammensetzungen gemäß Anspruch 1, wobei

- die synergistische Konservierungsmittelzusammensetzung wässrig oder nichtwässrig ist, oder
- die synergistische Konservierungsmittelzusammensetzung eine Emulsion, eine Mikroemulsion, eine Nanoemulsion, eine Lösung, eine Dispersion, eine Suspension, ein komplexes Koazervat, ein Abgabesystem auf Lamellenbasis, eine Liposomen/Niosomen-Formulierung oder ein Konzentrat ist.

## Revendications

1. Compositions pour utilisateur final à base aqueuse et non aqueuse, qui

(i) sont choisies dans le groupe constitué par les produits cosmétiques, les produits de toilette, les produits de soin personnel, les produits d'hygiène buccale, les produits de soin de la peau, les produits de soin des cheveux, les produits ménagers et de nettoyage, les produits à base de savon et pour le bain, les produits de nettoyage industriel et de collectivités, les produits désinfectants, les soins de plaies, les produits sanitaires, les compositions agricoles, les produits pour les industries textiles, les industries de revêtement et de blanchisserie, et
(ii) contiennent, dans la plage allant de 0,01% en poids à 5,0% en poids de la composition totale,

- une composition de conservateur synergique

(a) capable de fournir une activité antimicrobienne à large spectre et d'inhiber ou de tuer *Staphylococcus aureus, Escherichia coli, Pseudomonas aeruginosa, Aspergillus brasiliensis, Candida albicans* et/ou *Burkholderia cepacia,* et

(b) comprenant de 0,1% en poids à 99,9% en poids de carbonate de propylène et de 0,1% en poids à 99,9% en poids d'un ou plusieurs composés organiques choisis dans le groupe constitué par l'hexanediol, l'octanediol et l'hexylglycérol,

où le rapport du carbonate de propylène aux composés organiques se trouve dans la plage allant de 1:10 à 10:1.

2. Compositions pour utilisateur final à base aqueuse et non aqueuse, selon la revendication 1, dans lesquelles

- ladite composition de conservateur synergique est aqueuse ou non aqueuse, ou
- ladite composition de conservateur synergique est une émulsion, une microémulsion, une nano-émulsion, une solution, une dispersion, une suspension, un coacervat complexe, un système d'administration à base lamellaire, une formulation de liposomes/niosomes, ou un concentré.

**EP 3 288 380 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016154511 A1
- WO 0182694 A1
- WO 2009158617 A1
- WO 2010005776 A1
- WO 2010006235 A1
- WO 2010014715 A1
- EP 0338440 A1
- WO 9939581 A1
- WO 2015181840 A1
- US 5026723 A
- WO 1999006506 A1
- US 5122301 A

**Non-patent literature cited in the description**

- Cosmetic and Drug Preservation. Marcel Dekker Inc, vol. I
- **KULL A.C ; EISMAN, P.C. ; SYLWESTROWICZ, H.D. ; MAYER, R.L.** *Applied Microbiology,* 1961, vol. 9, 538-541